# EUROPEAN PATENT APPLICATION

(11) **EP 4 647 895 A1**
(43) Date of publication of application: **12.11.2025**
(21) Application number: 24174487.9
(22) Date of filing: 07.05.2024
(51) Int. Cl.: G06F 8/10, G06F 8/36, G06F 8/71, G06N 5/022

(54) **COMPUTER-IMPLEMENTED METHOD AND CORRESPONDING SYSTEM FOR CAPTURING AND PROVIDING KNOWLEDGE TO BE USED IN A LINUX-BASED IT TOOL ENVIRONMENT FOR DEVELOPPING MICRO SERVICE APPLICATIONS**

(71) Applicant: Siemens Aktiengesellschaft, 80333 München (DE)
(72) Inventor: Maier, Rupert, 91330 Eggolsheim (DE); Beyer, Dagmar, 80339 München (DE); Gesswein, Jürgen, 86156 Augsburg (DE)
(74) Representative: Siemens Patent Attorneys

(57) **Abstract**

Computer-implemented method and corresponding system for capturing and providing knowledge to be used in a Linux-based IT tool environment for developping micro service applications

The present invention relates to a system (S) for capturing and providing knowledge to be used in a Linux-based IT tool environment for developping micro service applications, comprising:
- an interface (IF) connected with at least one data gathering unit which receives raw build data as configuration patterns found in the Internet and/or in accessible repositories and which receives development data of IT based development projects comprising project requirements and configuration data including their build results expressing if a run of a piece of configuration data fullfils the requirements or not,
- an extracting unit (E) which is configured to extract knowledge to be used in a Linux-based IT tool environment for developping micro service applications from the raw build and development data and form the knowledge in a computerized permanently storable format and which is configured to store such formed knowledge in a connectable storage (KB) whereby such knowledge comprises version and configuration settings, and
- an access interface (AC) accessible from outside (OUT) of the system whereby the interface is configured to output at least parts of the formed knowledge to the outside of the system.

## Description

The present invention relates to a computer-implemented method and corresponding system for capturing and providing knowledge to be used in a Linux-based IT tool environment for developping micro service applications.

### BACKGROUND OF THE INVENTION

Domains and environments (e.g. "Industrial Automation") comprising Linux-based IT tools (like Kubernetes, Docker, Kiali, Istio, ...) are used to meet system requirements. But not all of these tools are either compatible to each other or first choice. Additionally, most of these IT tools have lots of versions and options to be customized. Therefore, a comprehensive knowledge is required to select the right tools, versions and configuration settings for specific tasks.

In the most domains and environments knowledge regarding IT tool usage, best practices, compatibility, and parameter settings is manually acquired by experts or comes from experts' experience.

In particular in the domain of "development of microservice-based applications based on Linux Environments" a huge number of applications is shared in the community as open source.

A microservice architecture is usually based on architectural patterns that arranges an application as a collection of loosely coupled, fine-grained services, communicating through lightweight protocols. One of its goals is that teams can develop and deploy their services independently of others.

These expert related approaches are time intensive and error prone (because of the number of different tools and settings, but also because the frequent changes in the tool landscape).

In view of this, the objective is to develop an efficient and reliable solution that automatically captures and provides computerized knowledge for this.

### SUMMARY OF THE INVENTION

The above-mentioned objective is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

An aspect of the invention is a system for capturing and providing knowledge to be used in a Linux-based IT tool environment for developping micro service applications, comprising:
- an interface connected with at least one data gathering unit which receives raw build data as configuration patterns found in the Internet and/or in accessible repositories and which receives development data of IT based development projects comprising project requirements and configuration data including their build results expressing if a run of a piece of configuration data fullfils the requirements or not,
- an extracting unit which is configured to extract knowledge to be used in a Linux-based IT tool environment for developping micro service applications from the raw build and development data and form the knowledge in a computerized permanently storable format and which is configured to store such formed knowledge in a connectable storage whereby such knowledge comprises version and configuration settings, and
- an access interface accessible from outside of the system whereby the interface is configured to output at least parts of the formed knowledge to the outside of the system.

Such a solution captures and persists related knowledge automatically and enables its usage to identify suitable build data, like tools together with their version to be used and configuration settings for specific tasks. This build data is finally required as a base to automate the generation, maintenance and execution of required build pipelines for Linux based Microservice applications.

Tool and/or configuration information can be preferably extracted, by using extract-transform-load technique, from the configuration data.

Internet site and/or repositories can be used to search for relevant development data (raw build data) that setup on "Linux-based IT tools" used to implement micro service applications.

Additional raw build data can be automatically extracted while developing microservice applications based on "Linux-based IT tools". A specific "IT Tool Development Extraction Service/Unit" can be integrated in the build process of an application. It analyzes all build runs and so it gets access to valid but also invalid configuration settings. In software development, a build process is a process by which an application program is automatically generated. Especially the invalid configuration settings are invaluable raw build data regarding IT tool knowledge.

The system can further comprise a network interface, configured for prompting a large language model, whereby at least one prompt includes text information from the raw build and development data and at least one further prompt or at least one further section of the prompt instruct the large language model (LLM) to identify and to structure text passages and/or key words from the text passages, and configured for receiving project configuration and programming data annotated with corresponding functional and non-functional specification, which is derived from the identified text passages and/or key words and follows the structure of the formed knowledge, and configured to extend the formed knowledge with the received project configuration and programming data. At least one further prompt or at least one further section of the prompt includes configuration patterns from the raw build data and at least one fourth prompt instruct the large language model to identify and to structure IT tools of the IT tool environment and their parameter settings, and configured for receiving valid and/or errorless build sequences and configuration data following the structure of the formed knowledge and configured to extend the formed knowledge with the received valid and/or errorless build sequences and configuration data.

Instead of using an LLM another natural language processing or information exctraction process can be applied to reach an extension of the formed knowledge with the project configuration and programming data annotated with corresponding functional and non-functional specification and/or valid and/or errorless build sequences and configuration data.

A further aspect of the invention is a computer-implemented method for capturing and providing knowledge to be used in a Linux-based IT tool environment for developping micro service applications, comprising the steps of:
- receiving, via an interface, raw build data as configuration patterns found in the Internet and/or in accessible repositories and which receives development data of IT based development projects comprising project requirements and configuration data including their build results expressing if a run of a piece of configuration data fullfils the requirements or not,
- extracting, via an extracting unit, knowledge to be used in a Linux-based IT tool environment for developping micro service applications from the raw build and development data and form the knowledge in a computerized permanently storable format and storing such formed knowledge in a connectable storage, whereby such knowledge comprises version and configuration settings, and
- outputting, via an access interface, at least parts of the formed knowledge.

A processor of the system can stear and/or control and/or load and/or execute method steps of the above mentioned method. The system can be part of a server or of a runtime environment within the multi-user system.

Embodiments as described above for the systems can be analogous applied for the method and for computer program (product) and for the computer-readable storage medium.

Systems can be implemented by hardware, firmware and/or software modules or a combination of them.

The computer-readable storage medium stores instructions executable by one or more processors of a computer, wherein execution of the instructions causes the computer system to perform the method. The one or more processors can be distributed organized on servers or in a cloud.

The computer program (product) is executed by one or more processors of a computer and performs the method.

### BRIEF DESCRIPTION OF THE SEVERAL VIEWS OF THE DRAWINGS

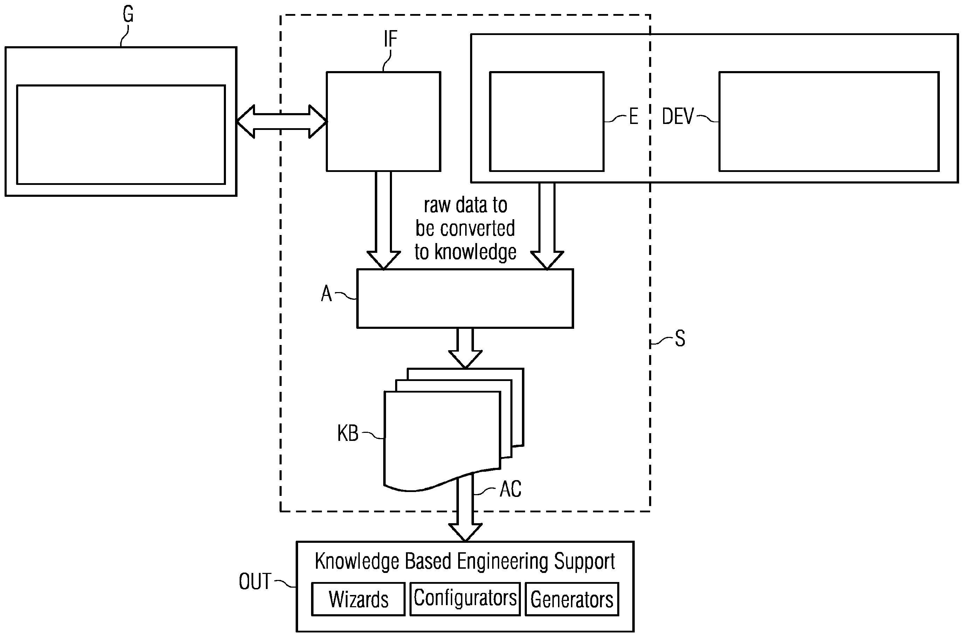

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. In the figures, identical or functionally identical elements are denoted by identical reference signs. Included in the drawings are the following figure:
The figure exemplary shows units of inventive system and its environment.

### DETAILED DESCRIPTION OF PREFERRED EXAMPLES/EMBODIMENTS

As shown in the figure the system comprises the following components und/or modules.

According to the invention raw build data can be analyzed and automatically extracted while developing micro service applications based on Linux-based IT tools. For this developing projects DEV can be used, that deliver relevant knowledge while their development process is executed.

A second source where the system S can capture relevant knowledge is marked with G that stands for web pages and accessible Git Repositories that use well established IT tools like Docker and Kubernetes. This data sources are usually outside of the system S. They hold very valuable information (see rectangle inside G in the figure) on how different requirements, development, build and configuring tasks can be solved.

The system S consists of the following components:

### 1) IT Tool Data Searcher

The IT Tool Data Searcher IF crawls relevant web pages and GIT repositories (see G) as kind of interface connected with a not shown gathering unit usually located outside of the system. It searches for relevant IT tool configuration and/or build raw data and runs automated searches for relevant build and configuration patterns. Usually, this kind of patterns does not only use the tools searched for but also additional first choice tools that are compatible with the patterns. Such raw build data and development data such as requirement and configuration data are sent to an IT tool knowledge analyzer A.

### 2) IT Tool Development Extraction Service

The IT Tool Development Extraction service E is a kind of gathering unit. It extracts relevant development data in IT based development projects.

This service is usually embedded in a development pipeline (build process) of suitable IT based development projects DEV. It automatically captures and extracts the build results of all configuration runs. Together with the underlying requirements and configuration data this information is sent to the IT tool knowledge analyzer A.

### 3) IT Tool Knowlegde Analyzer

The IT Tool Knowledge Analyzer A is an extracting unit.

The analyzer A sets up on the following general information types delivered by the IT Tool Data Internet Searcher IF and IT Tool Development Extraction Service E:
- Unstructured information and documents:
   Textual information like READMEs, documentation, tutorials, expert articles can be added to the knowledge system. Either they are added as document corpus for a Retrieval Augmented Generation (RAG) solution, or information extraction methods are applied using LLMs (Large Language Models) or other NLP (Natural Language Processing) techniques.

NLP combines computational linguistics rule-based modeling of human language with statistical and machine learning models to enable computers and digital devices to recognize, understand and generate text and speech. Interacting with NLP (units) mostly happens in the form of voice-operated GPS systems, digital assistants, speech-to-text dictation software or customer service chatbots (https://www.ibm.com/topics/natural-language-processing). LLM is an artificial neural network. The language model of a LLM is notable for its ability to achieve general-purpose language generation and other natural language processing tasks such as classification. LLMs acquire these abilities by learning statistical relationships from text documents during a computationally intensive self-supervised and semi-supervised training process. LLMs can be used for text generation, a form of generative Al, by taking an input text and repeatedly predicting the next token or word. Some notable LLMs are OpenAl's GPT series of models (e.g., GPT-3.5 and GPT-4, used in ChatGPT and Microsoft

Copilot), Google's PaLM and Gemini (the latter of which is currently used in the chatbot of the same name). Larger sized models, such as GPT-3, however, can be prompt-engineered to achieve similar results. They are thought to acquire knowledge about syntax, semantics and "ontology" inherent in human language corpora, but also inaccuracies and biases present in the corpora (https://en.wikipedia.org/wiki/Large_language_model).

For more complex and knowledge-intensive tasks, it is possible to build a language model-based system that accesses external knowledge sources to complete tasks. RAG takes an input and retrieves a set of relevant/supporting documents given a source. The documents are concatenated as context with the original input prompt and fed to the text generator which produces the final output. This is very useful as LLMs's parametric knowledge is usually static. RAG allows language models to bypass retraining, enabling access to the latest information for generating reliable outputs via retrieval-based generation (https://www.promptingguide.ai/techniques/rag).

From the system requirement documents the knowledge is extracted which kind of system is implemented.

This can either be performed explicitly via an information extraction process using LLMs or other NLP information extraction / key word extraction techniques. The characterizing system features are modelled in the knowledge system, and relevant text passages are extracted and classified towards these categories e.g. configuration settings, compatibility and/or requirements. In this case the information is extracted explicitly in a processing step and stored in the knowledge base to be accessed in later steps. This can also be performed implicitly by using the requirement documents as corpus in a Retrieval Augmented Generation System. Then the requirements serve as annotation to the configurations in the knowledge base, which are made available via a search index. The information is then extracted ad hoc, when required.

The formed knowledge in the knowledge base is extended, by following the structure of the formed knowledge, with the project configuration and programming data, which are derived from the identified text passages and/or key words.
- Batch, Build and Configuration files:
   From the batch, build and configuration files the knowledge is extracted which tools and configuration settings were used and how they used to meet the related requirements. As configurations follow fixed schemas in known structures the information extraction can be performed using standard ETL (extract-transform-load) processes with pre-defined mappings. ELT stands for "Extract, Load, Transform" and is another type of data integration process that is similar to the ETL (Extract, Transform, Load) process. This process moves raw data from a source system to a target resource, e.g. B. transferred to a data warehouse (https://www.ibm.com/de-de/topics/elt).
- Result data and logs:
   From the result data and logs generated while builds are executed the information is extracted, which kind of tool and parameter combinations are valid and which of them are invalid (in case of "IT Tool Development Extraction Service" is source of the raw build data). The knowledge extraction can be used via an information extraction process using LLMs or other NLP information extraction techniques, e.g., retrieving and categorizing error /fail messages based on known patterns. The extracted information indicates which tool is failing, as well as could provide a reason for the error (depending on the tool internally defined error messages). The formed knowledge in the knowledge base is extended, by following the structure of the formed knowledge, with the extracted information.

The analyzer extracts knowledge from these data sources and forms the knowledge in a computerized permanently storage format and stores it in a corresponding IT Tool Knowledge Base KB. In addition to the extracted knowledge from the sources described above, all kind of related and relevant meta data (like versions, settings of the underlying operation system) is added.

The analyzer A analyzes all build runs and gets access to valid but also invalid build sequences and configuration settings. Especially the invalid configuration settings are invaluable raw build data regarding IT tool knowledge.

The IT Tool Knowledge Analyzer can be implemented on the basis of standard Al methods.

### 4) IT Tool Knowledge Base

The Knowledge Base KB can be implemented with techniques like so called Triple Stores or Case Based Reasoning. It is filled with knowledge by the IT tool knowledge analyzer. Mainly it holds the following kind of knowledge:
- How often are specific tools used?
- Which tools are used in which kind of combination?
- What kind of operation system and operation system settings are used?
- What kind of version and configuration is required for each of the tools to make micro service applications executable?
- What kind of specific requirements are solved or tried to solve?
- Which tool combinations and parameter settings are successful?
- Which kind of combinations are invalid and lead to errors?

### 5) An access interface AC for knowledge retrieval from outside OUT

This interface is accessible from outside of the system. If this interface receives knowledge retrievals from outside of the system then the interface provides/outputs at least parts of the formed knowledge stored the Knowledge Base KB to the outside of the system.

The invention has been described in detail with reference to embodiments thereof and examples. Variations and modifications are possible. Instead of the above-described production process one or more processes can analogously be applied to other technical systems.

The multi user system and its parts can be (computer-) implemented for performing the inventive method steps.

Parts of the system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the systems and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. System (S) for capturing and providing knowledge to be used in a Linux-based IT tool environment for developping micro service applications, comprising:
- an interface (IF) connected with at least one data gathering unit which receives raw build data as configuration patterns found in the Internet and/or in accessible repositories and which receives development data of IT based development projects comprising project requirements and configuration data including their build results expressing if a run of a piece of configuration data fullfils the requirements or not,
- an extracting unit (E) which is configured to extract knowledge to be used in a Linux-based IT tool environment for developping micro service applications from the raw build and development data and form the knowledge in a computerized permanently storable format and which is configured to store such formed knowledge in a connectable storage (KB) whereby such knowledge comprises version and configuration settings, and
- an access interface (AC) accessible from outside (OUT) of the system whereby the interface is configured to output at least parts of the formed knowledge to the outside of the system.

2. System according to the preceding claim, wherein tool and/or configuration information is extracted, by using extract-transform-load technique, from the configuration data.

3. System according to the previous claim 1 or 2, wherein the system further comprises a network interface (A), configured for prompting a large language model, whereby at least one prompt includes text information from the raw build and development data and at least one further prompt or at least one further section of the prompt instruct the large language model to identify and to structure text passages and/or key words from the text passages, and configured for receiving project configuration and programming data annotated with corresponding functional and non-functional specification, which is derived from the identified text passages and/or key words and follows the structure of the formed knowledge, and configured to extend the formed knowledge with the received project configuration and programming data.

4. System according to any of the preceding claims, wherein the network interface is configured for prompting the large language model, whereby at least one further prompt or at least one further section of the prompt includes configuration patterns from the raw build data and at least one fourth prompt instruct the large language model to identify and to structure IT tools of the IT tool environment and their parameter settings, and configured for receiving valid and/or errorless build sequences and configuration data following the structure of the formed knowledge and configured to extend the formed knowledge with the received valid and/or errorless build sequences and configuration data.

5. System according to according to the preceding claim 1 or 2, wherein the system further comprises a network interface (A) configured to connect a natural language processing unit which is trained with the raw build and development data and structure of the formed knowledge and provides project configuration and programming data annotated with corresponding functional and non-functional specification, which is derived, by the natural language processing unit, from the text passages from the raw build and development data and/or from key words from the text passages, and configured to extend the formed knowledge with the provided project configuration and programming data.

6. System according to according to the preceding claim 1 or 2 or 5, wherein the natural language processing unit is trained IT tools of the IT tool environment and their parameter settings and structure of the formed knowledge and provides valid and/or errorless build sequences and configuration data following the structure of the formed knowledge and the network interface is configured to extend the formed knowledge with the provided valid and/or errorless build sequences and configuration data.

7. Computer-implemented method for for capturing and providing knowledge to be used in a Linux-based IT tool environment for developping micro service applications, comprising the steps of:
- receiving, via an interface (IF), raw build data as configuration patterns found in the Internet and/or in accessible repositories and which receives development data of IT based development projects comprising project requirements and configuration data including their build results expressing if a run of a piece of configuration data fullfils the requirements or not,
- extracting, via an extracting unit (E), knowledge to be used in a Linux-based IT tool environment for developping micro service applications from the raw build and development data and form the knowledge in a computerized permanently storable format and storing such formed knowledge in a connectable storage (KB) whereby such knowledge comprises version and configuration settings, and
- outputting, via an access interface (AC), at least parts of the formed knowledge.

8. A computer program comprising instructions which, when the program is executed by one or more processors of a system preferably according to any of the preceding system claims, cause the one or more processors to carry out the steps of the method of the previous method claim.
